# EUROPÄISCHE PATENTANMELDUNG

(11) **EP 3 238 978 A1**
(43) Veröffentlichungstag der Anmeldung: **01.11.2017**
(21) Anmeldenummer: 17167716.4
(22) Anmeldetag: 24.04.2017
(51) Int. Cl.: B60L 11/18, H02M 3/337, H02J 3/18, H02M 7/483, H02J 7/02, H02M 7/797

(54) **KOMBINIERTE MULTILEVEL-UMRICHTER- UND ACDC LEISTUNGSLADE-EINHEIT**

(30) Priorität: 25.04.2016 DE 102016206945
(71) Anmelder: VOLKSWAGEN AKTIENGESELLSCHAFT, 38440 Wolfsburg (DE)
(72) Erfinder: KUSCH, Rüdiger, 38116 Braunschweig (DE); SCHRÖDER, Hendrik, 38173 Sickte (DE)
(74) Vertreter: MFG Patentanwälte Meyer-Wildhagen Meggle-Freund Gerhard PartG mbB

(57) **Zusammenfassung**

Traktionsnetz für ein Kraftfahrzeug, umfassend eine Ladeeinheit (2) zum Laden einer Traktionsbatterie (3), sowie einen Fahrumrichter (1), der sowohl eine elektrische Maschine (4) als auch die Ladeeinheit (2) an die Traktionsbatterie (3) koppelt.

## Beschreibung

Die Erfindung betrifft das Gebiet der Traktionsnetze eines Kraftfahrzeugs, insbesondere das Laden der Traktionsbatterie eines Kraftfahrzeugs.

In herkömmlichen Traktionsnetzen sind Fahrumrichter für den Fahrantrieb, AC-Ladeeinheit und DC-Direktverbindung als Einzelkomponenten ausgeführt. Herkömmliche Ladesysteme haben den Nachteil, dass die AC-Ladeleistung meist durch die Infrastruktur auf 22kW, seltener auf 44kW, begrenzt ist und das höhere DC-Ladeleistungen nur durch Direktverbindung von der DC-Ladesäule auf die Batterie realisiert werden können. Die Ladestromregelung ist dabei off-board und letztendlich nicht unter Fahrzeugkontrolle.

Die deutsche Offenlegungsschrift DE 10 2012 202 764 A1 offenbart eine Ladevorrichtung eines elektrisch betriebenen Fahrzeugs, das einen Motor, einen Antriebsumrichter und einen Energiespeicher umfasst. Der Antriebsumrichter des Fahrzeugs bildet beim Anschluss der Phasen des Motors an ein Niederspannungsnetz die Ladevorrichtung aus. Diese Lösung hat den Nachteil, dass keine vom Antriebsumrichter separierte Ladeeinheit vorliegt, so dass das Laden auf dem Spannungsniveau des Antriebsumrichters stattfindet.

Die Aufgabe der Erfindung besteht darin, die Nachteile herkömmlicher Ladesysteme zu überwinden. Diese Aufgabe wird durch das erfindungsgemäße Traktionsnetz nach Anspruch 1 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Traktionsnetz für ein Kraftfahrzeug umfasst eine Ladeeinheit zum Laden einer Traktionsbatterie, sowie einen Fahrumrichter, der sowohl eine elektrische Maschine als auch die Ladeeinheit an die Traktionsbatterie koppelt. Das erfindungsgemäße Traktionsnetz hat den Vorteil, dass beispielsweise eine mehrphasige Ladeeinheit und eine geregelte DC-Ladeeinheit mit einem Fahrumrichter vereint wird und dabei leistungselektronische Komponenten, wie IGBTs und Dioden, mehrfach genutzt werden.

Das erfindungsgemäße Traktionsnetz kann vorteilhaft in einem auf einem elektrischen Antrieb beruhenden Kraftfahrzeug eingesetzt werden, beispielsweise in einem batteriebetriebenen Elektrofahrzeug (BEV), einem Hybrid-Fahrzeug (HEV), einem Plug-In-Hybrid-Fahrzeug (PHEV), einem Brennstoffzellenfahrzeug (FCEV), einem Range-Extended-Electric-Vehicle (REEV), oder dergleichen. Bei der elektrischen Maschine kann es sich beispielsweise um einen beliebigen elektrischen Traktionsmotor handeln. Bei der Traktionsbatterie kann es sich um eine beliebige Hochvoltbatterie handeln, die zur Speisung der elektrischen Maschine vorgesehen ist.

Gemäß einer bevorzugten Ausführungsform ist der Fahrumrichter ferner so ausgelegt, dass er einen zusätzlichen Abgriff für den Leistungsfluss vom Lademodul aufweist. Der Abgriff kann durch steuerbare Schütze realisiert werden, die vom Energiemanagement gesteuert werden. Durch entsprechende Ansteuerung der Schütze wird der Fahrumsetzer vom Betriebsmodus Fahren, bei dem die Traktionsbatterie mit der elektrischen Maschine gekoppelt ist, in den Betriebsmodul Laden, bei dem die Traktionsbatterie mit der Ladeeinheit gekoppelt ist, geschaltet, und umgekehrt.

In einem bevorzugten Ausführungsbeispiel besteht eine galvanische Trennung zwischen der Ladeeinheit und der Traktionsbatterie bzw. dem Hochvoltsystem, das die Traktionsbatterie umfasst. Eine galvanische Trennung der Ladeeinheit von der Traktionsbatterie kann beispielsweise über einen Serienresonanzkreis erreicht werden, der beispielsweise einen Transformator, sowie eine Drossel und einen Kondensator umfasst.

Ein Vorteil des erfindungsgemäßen Traktionsnetzes besteht darin, dass sich durch die Verschaltung der Ladeeinheit mit dem Fahrumrichter Leistungshalbleiter des Fahrumrichters mehrfach nutzen lassen. So können Leistungshalbleiter, die für den Betriebsmodus Fahren installiert wurden erfindungsgemäß nun für den Betriebsmodul Laden ebenfalls verwendet werden. Insbesondere kann die Ladeeinheit AC-Laden mit Power-Factor-Correction, sowie geregeltes DC-Schnellladen mit galvanischer Trennung der Ladeeinheit von der Traktionsbatterie bzw. dem Hochvoltsystem des Traktionsnetzes vereinen. Durch die Integration mit Leistungshalbleitern für den Fahrbetrieb lässt sich mit dem erfindungsgemäßen Ansatz eine hohe Leistungsdichte erreichen. Stromschienen, bei denen aufgrund der unteren Auslegespannung eine hohe Stromdichte erforderlich ist, lassen sich bei diesem integrierten Ansatz auf ein Minimum beschränken. Durch die Mehrfachnutzung von passiven Komponenten (Kondensatoren) und Sensorik lassen sich hohe Leistungsdichte erreichen.

Bevorzugt wird als Fahrumrichter ein Multilevel-Fahrumrichter eingesetzt, der mittels zusätzlicher Verschaltung die Vorteile des Multilevel-Umrichters mit dem integrierten Leistungsladen vereint. Gemäß einer bevorzugten Ausführungsform ist der Fahrumrichter als eine 3-level Umrichter-Topologie ausgelegt, die es erlaubt auf hohe Spannungslagen (z.B. 800 V) auf Seiten des Hochvoltsystems zu gehen. In dem Fahrumrichter können automotivequalifizierte Leistungshalbleiter eingesetzt werden, um diese hohe Spannungslagen zu erreichen. Die 3-level Umrichter-Topologie erlaubt es ferner, durch die günstigeren Eigenschaften bei der Flankensteilheit der Spannung die Anforderung an die maschinenseitigen Wicklungen zu entspannen. Alternativ kann der Fahrumrichter auch als eine 2-level Umrichter-Topologie oder dergleichen ausgelegt werden.

Die Ladeeinheit kann eine AC-Ladeeinheit und/oder eine DC-Ladeeinheit umfassen, insbesondere eine mehrphasige AC-Ladeeinheit und/oder eine geregelte DC-Ladeeinheit, vorzugsweise ein geregeltes DC-Schnelllademodul.

Die AC-Ladeeinheit kann so ausgelegt sein, dass beim AC-Laden der herkömmliche einphasige Betrieb (z.B. 3.3kW bis 7kW) unterstützt wird, sowie der dreiphasige Betrieb mit den üblichen Strömen und Leistungen von 11kW, 22kW oder 44kW, je nach verwendetem mechanischen Verbinder. Eine Nachführung des Leistungsfaktors mit der integrierten Steuerung und Regelung ist ebenfalls ermöglicht.

Durch das geregelte DC-Schnelllademodul wird vorzugsweise ein weiter Spannungsbereich am DC-Eingang, beispielsweise 200 bis 800V ermöglicht. Beim DC-Laden wird von einer in weiten Bereichen erlaubten Eingangsspannung (z.B. 200V bis 800V) mit der Steuerung und Regelung durch das Energiemanagement die Ladeleistung abhängig von der Betriebsstrategie eingestellt.

Das vom erfindungsgemäßen Traktionsnetz unterstützte DC-Schnellladen ist insbesondere für long-range BEV vorteilhaft, da die typischen Energieinhalte der Batterie bei 80-100kWh liegen, was bei herkömmlichen Ladeleistungen sehr lange Ladezeiten zu Folge hätte. Bei hohen Ladeleistungen ist in diesem Zuge eine 800V Spannungslage beim Batteriesystem besonders vorteilhaft. DC-Schnellladen bei 800V ist jedoch von Seiten der Infrastruktur derzeit noch nicht nicht abgedeckt. Der erfindungsgemäße Ansatz erlaubt jedoch auch mit der heutigen Infrastruktur ein 800V Batteriesystem schnellladefähig zu machen. Durch Verwendung der Umsetzer-Topologie des Fahrumrichters für das Leistungsladen können Ladeleistungen von beispielsweise 50kW bis 300kW, oder mehr erreicht werden.

Zur Umwandlung der DC-Spannung einer DC-Ladeeinheit in eine Wechselspannung kann die Ladeeinheit eine H-Brücke aufweisen. Das Energiemanagement kann mittels solch einer H-Brücke eine Power-Factor-Correction durchführen.

Gemäß einer bevorzugten Ausführungsform wird die Umrichter-Topologie des Fahrumrichters in einem ersten Modul (Fahrumrichtermodul) untergebracht und die Ladeeinheit wird in einem zweiten Modul (Lademodul) untergebracht. Gemäß einer bevorzugten Ausführungsform befinden sich das Lademodul und das Fahrumrichtermodul als Package räumlich in einem Gehäuse, mit gemeinsamer Nutzung von Steuerung, Kühleinheiten, Verbindern, und strukturellen Komponenten.

Die Erfindung betrifft auch eine Regelung, die beispielsweise in einer Energiemanagement-Einheit des Kraftfahrzeugs implementiert ist. Diese Regelung regelt bzw. steuert sowohl den Fahrumrichter als auch die Ladeeinheit.

In einem bevorzugten Ausführungsbeispiel wird die Ladeeinheit und oder der Fahrumrichter aktiv geregelt, beispielsweise durch eine Energiemanagementeinheit des Kraftfahrzeugs. Dies hat den Vorteil, dass gemäß dem erfindungsgemäßem Ansatz das Kraftfahrzeug die Leistungsregelung, beispielsweise beim DC-Schnellladen, übernehmen kann und damit die Regelung und das Energiemanagement nicht auf die Ladesäule übertragen werden muss. Ferner wird der Fahrumrichter des erfindungsgemäßen Traktionsnetzes durch das Energiemanagement des Kraftfahrzeugs geregelt bzw. gesteuert. Durch das vorsehen von Strommesspunkten und Spannungsmesspunkten kann eine Steuerung und Regelung durchgeführt werden. Die Steuerung und Regelung kann durch einen Prozessor einer Energiemanagement-Einheit und entsprechend ausgelegte Software realisiert werden. Mittels einer durch das Energiemanagement umgesetzten Regelung wird ein Pulsmuster erzeugt, welches erlaubt, bei Fahrzeugantrieben gezielt harmonische Stromkomponenten zu eliminieren, was den Gesamtwirkungsgrad der elektrischen Maschine verbessert, da Oberwellen nicht zur Drehmomentbildung beitragen.

Ausführungsbeispiele der Erfindung werden nun beispielhaft und unter Bezugnahme auf die beigefügte Zeichnungen beschrieben, in denen:
Fig. 1 ein Ausführungsbeispiel eines erfindungsgemäßen Traktionsnetzes zeigt;
Fig. 2 ein weiteres Ausführungsbeispiel eines erfindungsgemäßen Traktionsnetzes zeigt; und
Fig. 3 eine beispielhafte Steuerung und Regelung für das erfindungsgemäße Traktionsnetz zeigt.

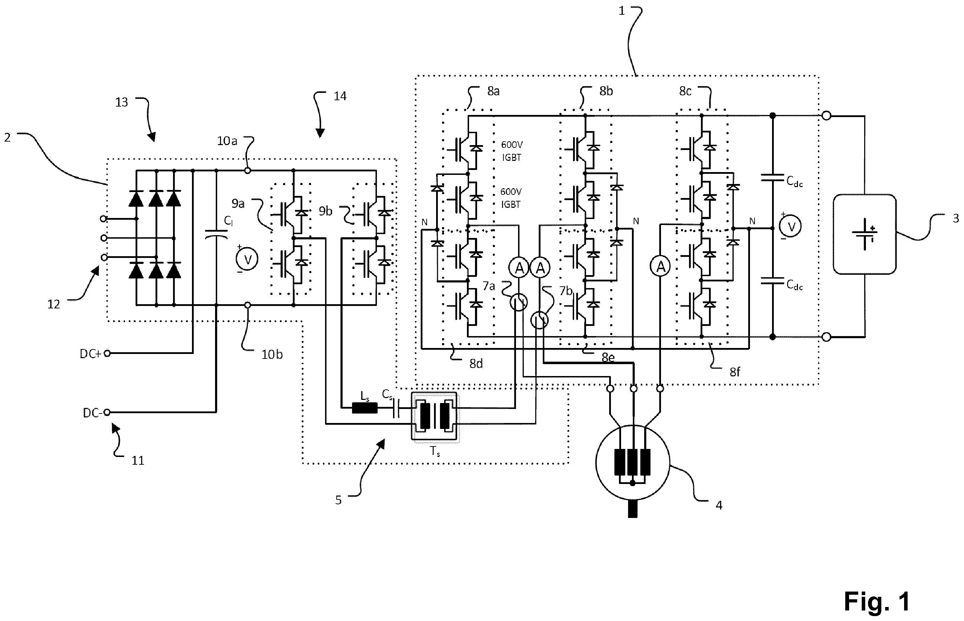

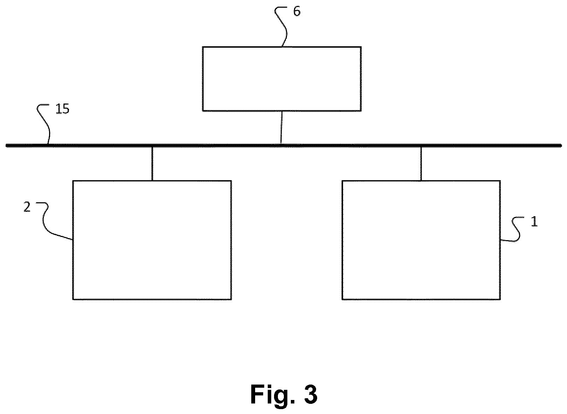

Das Traktionsnetz des Ausführungsbeispiels der Fig. 1 weist einen Fahrumrichter 1 auf, der als ein erstes Modul ausgelegt ist, und eine Ladeeinheit 2, die als ein zweites Modul ausgelegt ist. Der Fahrumrichter 1 koppelt eine Traktionsbatterie 3 an eine elektrische Maschine 4, die als Traktionsmotor dient. Die Traktionsbatterie 3 ist auf eine Spannung von 800V ausgelegt. Der Fahrumrichter 3 ist als eine 3-level Umrichter-Topologie ausgelegt. Die Spannung der Traktionsbatterie 3 wird mittels zweier Kondensatoren C_{dc} auf drei Spannungsniveaus aufgeteilt, wobei N den Neutralpunkt darstellt. Für die 3-level Umrichter-Topologie sind für jede Phase jeweils zwei Leistungsschalterpaare 8a-f mit zugehörigen Dioden vorgesehen. Als Leistungsschalter kommen 600V IGBTs zu Einsatz. Die Leistungsschalter 8a-f werden in einem Betriebsmodus Fahren durch eine Steuerung und Regelung (6 in Fig. 3) so angesteuert, dass die Gleichspannung der Traktionsbatterie 3 in eine dreiphasige Wechselspannung zum Betrieb der elektrischen Maschine 4 umgewandelt wird. Auf Grundlage von Daten der Strommesspunkte A und des (schematisch angedeuteten) Spannungsmesspunktes V des Fahrumrichters 1 liefert die Steuerung und Regelung ein geeignetes Pulsmuster zur Ansteuerung der Schalter 8a-8f. Der Fahrumrichter 1 weist zwei steuerbare Schütze 7a,b auf, die als Abgriff für den Anschluss der Ladeeinheit 2 dienen. Diese Schütze 7a,b werden von der Steuerung und Regelung (6 in Fig. 3) so angesteuert, dass zwischen einem Betriebsmodus Fahren und einem Betriebsmodus Laden gewechselt werden kann. Die Ladeeinheit 2 ist über einen Serienresonanzkreis 5 an den Fahrumrichter 1 gekoppelt. Der Serienresonanzkreis 5 weist einen Transformator Tₛ zur galvanischen Trennung der Ladeeinheit 2 vom Hochvoltsystem (Fahrumrichter 1, Traktionsbatterie 3, elektrische Maschine 4) auf, sowie eine Drossel Lₛ und einen Kondensator Cₛ, die den Resonanzkreis definieren. Die Ladeeinheit 2 weist einen DC-Ladeanschluss 11 (DC+ und DC-) auf und ist für ein DC-Hochleistungsladen mit Ladespannungen von 200V bis 800V und Ladeleistungen bis zu 300kW ausgelegt. Die über den DC-Ladeanschluss 11 zugeführte DC-Ladespannung wird mittels einer H-Brücke 14, die aus Leistungsschaltern 9a, b mit zugehörigen Dioden besteht, und dem Serienresonanzkreis 5 in eine Wechselspannung umgewandelt, die in einem Betriebsmodus Laden über die Abgriffe 7a,b dem Fahrumrichter 1 zugeführt wird. Der Fahrumrichter wandelt die von der Ladeeinheit zugeführte Wechselspannung in eine Gleichspannung für das Aufladen der Traktionsbatterie 3 um. Im Betriebsmodus Laden erzeugt die Steuerung und Regelung (6 in Fig. 3) auf Grundlage von Daten von Spannungsmesspunkten V und Strommesspunkten A sowohl für die H-Brücke als auch auf die Leistungsschalter 8a-8f des Fahrumrichters ein geeignetes Pulsmuster, um je nach Spannungszufuhr und Leistungszufuhr beim DC-Laden eine geeignete Gleichspannung

(hier 520V-800V) für das Aufladen der Traktionsbatterie 3 zu erzeugen. Die Ladeeinheit 2 umfasst ferner auch eine mehrphasige AC-Ladeeinheit umfassend einen AC-Ladeanschluss 12, Gleichrichterdioden 13, sowie einem Ladekondensator Cₗ. Die AC-Ladeeinheit unterstützt einen einphasigen Betrieb (z.B. 3.3kW bis 7kW), sowie einen dreiphasigen Betrieb mit den üblichen Strömen und Leistungen von 11 kW, 22kW oder 44kW, je nach verwendetem mechanischen Verbinder. Durch geeignete Ansteuerung durch die Steuerung und Regelung (6 in Fig. 3) ermöglicht die AC-Ladeeinheit auch ein Nachführung des Leistungsfaktors. Die Ladeanschlüsse 11 und 12 sind mittels gesteuerter Schütze 10a,b von der H-Brücke abtrennbar.

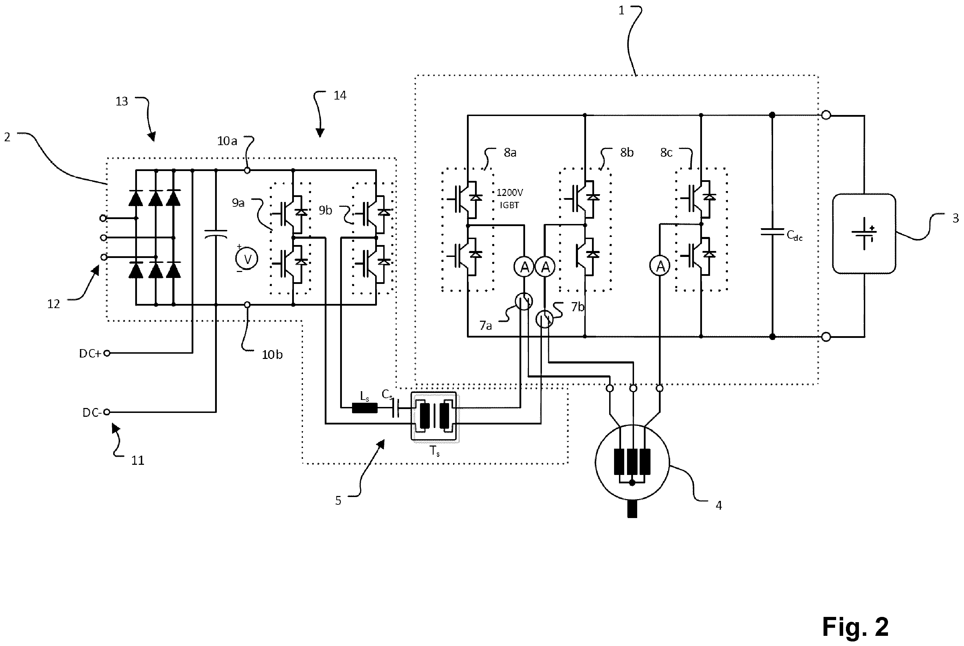

Fig. 2 zeigt ein weiteres Ausführungsbeispiel eines erfindungsgemäßen Traktionsnetzes. Das Traktionsnetz entspricht weitgehend dem des Ausführungsbeispiels der Fig. 1. Der Unterschied besteht darin, dass der Fahrumrichter 1 statt als eine 3-level Umrichter-Topologie als eine 2-level Umrichter-Topologie ausgelegt ist. Gemäß der 2-level Umrichter-Topologie ist für jede Phase ein Leistungsschalterpaar 8a-c mit zugehörigen Dioden vorgesehen. Als Leistungsschalter kommen in diesem Ausführungsbeispiel 1200V IGBTs zu Einsatz.

Fig. 3 zeigt eine beispielhafte Steuerung und Regelung für das erfindungsgemäße Traktionsnetzes. Eine Steuerung und Regelung 6 ist über einen Fahrzeugbus 15 sowohl mit der Ladeeinheit 2 als auch mit dem Fahrumrichter 1 gekoppelt. Die Steuerung und Regelung 6 erzeugt Pulsmuster zur Ansteuerung der Leistungsschalter (8a-f in Fig. 1 bzw. 8a-c in Fig. 2) des Fahrumrichters, sowie Pulsmuster zur Ansteuerung der H-Brücke (14 in den Fig. 1 und 2) in der Ladeeinheit 2. Ferner erzeugt die Steuerung und Regelung 6 Steuersignale für die gesteuerten Schütze zur Trennung der Ladeeinheit 2 vom Fahrumrichter 1 (7a,b in den Fig. 1 und 2) und für die gesteuerten Schütze (10a,b in den Fig. 1 und 2) zur Trennung der Ladeanschlüsse (11, 12 in den Fig. 1 und 2) von der H-Brücke (14 in den Fig. 1 und 2) in der Ladeeinheit 2. Die Steuerung und Regelung 6 ist ferner mit Strommesspunkten und Spannungsmesspunkten (A bzw. v in den Fig. 1 und 2) verbunden, die Messwerte liefern, auf deren Grundlage die Steuerung und Regelung 6 Pulsmuster erzeugt.

### Bezugszeichenliste

- 1: Fahrumrichter
- 2: Ladeeinheit
- 3: Traktionsbatterie
- 4: elektrische Maschine (Traktionsmotor)
- 5: Serienresonanzkreis
- Lₛ: Drossel des Serienresonanzkreises
- Cₛ: Kondensator des Serienresonanzkreises
- Tₛ: Transformator des Serienresonanzkreises
- 6: Steuerung und Regelung (Energiemanagement)
- 7a,b: steuerbare Schütze
- 8a-f: Leistungsschalter und Dioden des Fahrumrichters
- N: Neutralpunkt
- C_{dc}: Kondensatoren des Fahrumrichters
- 9a,b: Leistungsschalter und Dioden der H-Brücke
- 10a,b: steuerbare Schütze
- 11: DC-Ladeanschluss
- DC+: DC-Ladeanschluss +
- DC-: DC-Ladeanschluss -
- 12: mehrpoliger AC-Ladeanschluss
- 13: ACDC-Wandler
- 14: H-Brücke
- 15: Fahrzeugbus
- A: Strommesspunkt
- V: Spannungsmesspunkt

## Patentansprüche

1. Traktionsnetz für ein Kraftfahrzeug, umfassend eine Ladeeinheit (2) zum Laden einer Traktionsbatterie (3), sowie einen Fahrumrichter (1), der sowohl eine elektrische Maschine (4) als auch die Ladeeinheit (2) an die Traktionsbatterie (3) koppelt.

2. Traktionsnetz nach Anspruch 1, wobei der Fahrumrichter (1) einen Abgriff für den Leistungsfluss vom Lademodul (2) aufweist.

3. Traktionsnetz nach einem der vorstehenden Ansprüche, wobei der Abgriff durch steuerbare Schütze (7a, 7b) realisiert ist.

4. Traktionsnetz nach einem der vorstehenden Ansprüche, wobei eine galvanische Trennung zwischen der Ladeeinheit (2) und der Traktionsbatterie (3) besteht.

5. Traktionsnetz nach einem der vorstehenden Ansprüche, wobei eine galvanische Trennung der Ladeeinheit (2) von der Traktionsbatterie (3) über einen Serienresonanzkreis (5) erreicht wird.

6. Traktionsnetz nach einem der vorstehenden Ansprüche, wobei durch die Verschaltung der Ladeeinheit (2) mit dem Fahrumrichter (1) Leistungshalbleiter (8a-f) des Fahrumrichters (1) für einen Betriebsmodus Fahren und einen Betriebsmodus Laden mehrfach genutzt werden.

7. Traktionsnetz nach einem der vorstehenden Ansprüche, wobei die Ladeeinheit (1) ein AC-Laden (12) mit Power-Factor-Correction (14), sowie ein geregeltes DC-Schnellladen (11) mit galvanischer Trennung der Ladeeinheit (2) von der Traktionsbatterie (3) ermöglicht.

8. Traktionsnetz nach einem der vorstehenden Ansprüche, wobei der Fahrumrichter (1) als ein Multilevel-Fahrumrichter ausgelegt ist.

9. Traktionsnetz nach einem der vorstehenden Ansprüche, wobei die Ladeeinheit (2) ein geregeltes DC-Schnelllademodul umfasst, das einen Spannungsbereich am DC-Eingang (11) von 200 bis 800V und/oder Ladeleistungen bis zu 300kW ermöglicht.

10. Traktionsnetz nach einem der vorstehenden Ansprüche, wobei die Umrichter-Topologie des Fahrumrichters (1) in einem ersten Modul untergebracht ist und die Ladeeinheit (2) in einem zweiten Modul untergebracht ist.
